Europäisches Patentamt

European Patent Office

Office européen des brevets

(19)

(11) **EP 0 897 969 B1**

(12) **FASCICULE DE BREVET EUROPEEN**

(45) Date de publication et mention
de la délivrance du brevet:
**14.03.2001 Bulletin 2001/11**

(51) Int Cl.⁷: **C10M 173/02**, C09D 151/06

(21) Numéro de dépôt: **98402021.4**

(22) Date de dépôt: **07.08.1998**

(54) **Procédé de traitement de surfaces de tôles métalliques pour améliorer leur aptitude au collage, à l'emboutissage et au dégraissage**

Verfahren zur Behandlung von Metallblech-Oberflächen zur Verbesserung der Verklebung, der Tiefziehverarbeitung und der Entfettung

Treatment method of sheet metal surfaces in order to improve adhesion, deep-drawing and degreasing

(84) Etats contractants désignés:
**AT BE CH DE DK ES FI FR GB GR IE IT LI LU NL PT SE**

(30) Priorité: **11.08.1997 FR 9710263**

(43) Date de publication de la demande:
**24.02.1999 Bulletin 1999/08**

(73) Titulaire: **SOLLAC**
**92800 Puteaux (FR)**

(72) Inventeurs:
• **Canourgues, Nathalie**
**93700 Drancy (FR)**

• **Charbonnet, Philippe**
**60300 Senlis (FR)**

(74) Mandataire: **Le Guen, Gérard et al**
**CABINET LAVOIX**
**2, place d'Estienne d'Orves**
**75441 Paris Cédex 09 (FR)**

(56) Documents cités:
**EP-A- 0 344 717          GB-A- 1 170 290**

• **DATABASE WPI Section Ch, Week 8637 Derwent Publications Ltd., London, GB; Class A17, AN 83-824507 XP002066930 & JP 58 177476 A (KAWASAKI STEEL CORP) , 18 octobre 1983**

**Description**

La présente invention a trait au développement d'un traitement de surfaces, applicable à des pièces métalliques de type tôle. Plus précisément, elle se rapporte à la mise au point d'une composition aqueuse de traitement qui permet d'améliorer l'emboutissabilité de ces pièces, de leur garantir une protection temporaire efficace contre la corrosion, qui soit dégraissable par les bains de traitement de surface, notamment des lignes de mise en peinture, et qui présente également une bonne aptitude au collage.

Ces performances sont tout particulièrement précieuses dans le domaine de la sidérurgie, pour la fabrication de tôles, laminées à froid et revêtues, destinées notamment au secteur automobile. Actuellement, les principales finitions de surface appliquées par les sidérurgistes sur les tôles nues et revêtues, bien que donnant satisfaction en termes d'amélioration d'emboutissabilité, de protection temporaire et d'aptitude au dégraissage, présentent néanmoins un inconvénient majeur, inhérent à leur nature huileuse ; elles encrassent les ateliers et outils d'emboutissage et entraînent par ailleurs, des phénomènes de démouillage à l'issue de stockages prolongés des bobines de tôle.

Une première alternative proposée à ces huiles de surface, a consisté en des finitions de surfaces dites films secs prélubrifiants. Comparativement aux huiles prélubrifiantes classiques, cette nouvelle génération de produits de surface présente les avantages significatifs suivants : en raison de leur caractère non huileux, ces produits ne génèrent pas de problème d'encrassage au niveau des instruments. Les tôles recouvertes des films secs qui en dérivent, présentent des coefficients de frottement significativement réduits, comparativement aux tôles simplement huilées, et manifestent ainsi une meilleure aptitude à l'emboutissage.

En particulier, les films secs prélubrifiants ont pour avantage de ne pas nécessiter la mise en oeuvre d'un huilage supplémentaire pour les opérations de protection temporaire contre la corrosion et/ou de lubrification à l'emboutissage.

Toutefois, il subsiste un inconvénient au niveau de la mise en oeuvre des tôles recouvertes de ces films secs. Ces tôles s'avèrent, en effet, peu compatibles avec les opérations d'assemblage par collage, présentes notamment au niveau de certains ateliers de constructions automobiles et notamment des ateliers d'emboutissage et d'assemblage de l'habitacle automobile, non peint et dépourvu des divers organes mécaniques et d'équipement, ou encore de la "caisse en blanc". On déplore en particulier, leur mauvais comportement sur le plan de l'adhérence avec un certain nombre d'adhésifs, défaut fortement préjudiciable sur le plan industriel.

En fait, pour obtenir une bonne aptitude au collage avec ce type de tôles prélubrifiées, il est nécessaire que les adhésifs utilisés puissent établir des liaisons physico-chimiques avec la surface métallique. En effet, seul l'établissement de ces liaisons avec la surface métallique permet de garantir une bonne durabilité des liaisons collées réalisées, à l'égard de divers environnements agressifs tels ceux combinant l'effet de l'eau et de la chaleur. Cette bonne durabilité est en conséquence, un aspect primordial requis pour une bonne aptitude au collage. Lorsque les liaisons sont seulement établies entre l'adhésif et la surface du film sec, leur durabilité s'avère très médiocre compte tenu que ce film sec est dégraissable et par conséquent très peu stable vis à vis de l'action de l'humidité.

Or, pour que les adhésifs employés puissent établir des liaisons avec la surface métallique, il est indispensable que leur réseau moléculaire puisse interdiffuser ou absorber le film sec situé à la surface de la tôle. Ces mécanismes d'absorption ou d'interdiffusion sont donc fortement tributaires de la bonne affinité du réseau moléculaire du film sec vis à vis de celui de l'adhésif (bonne affinité physique et chimique, bonne solubilité ou miscibilité...).

La présente invention a précisément pour objectif de proposer un film sec prélubrifiant conforme aux exigences énoncées précédemment et manifestant avantageusement une bonne affinité de réseau moléculaire à l'égard des adhésifs de manière générale.

De manière inattendue, la demanderesse a ainsi mis en évidence qu'un polyéthylène modifié et un polyalkylène glycol permettaient de conférer aux tôles enduites d'un film sec prélubrifiant, les incorporant conjointement, une bonne aptitude au collage tout en leur préservant des propriétés avantageuses sur les plans de la lubrification, de la résistance à la corrosion et de la dégraissabilité.

Ces résultats sont d'autant plus inattendus que les comportements des tôles prélubrifiées avec des films secs à base soit de polyalkylène glycol soit de polyéthylène modifié ne sont pas avantageux à l'égard de tous les adhésifs.

Ainsi, pour des tôles prélubrifiées avec un film sec à base de polyéthylène modifié, on observe une mauvaise aptitude au collage avec les adhésifs époxydiques qui se traduit par une mauvaise adhésion, à l'état initial et à l'issue d'un cycle de vieillissement accéléré. A l'évidence, il existe une incompatibilité entre les réseaux moléculaires du film et des adhésifs époxydiques, qui se traduit en particulier par une mauvaise miscibilité ou solubilité de ce film sec avec la résine de base des adhésifs époxydiques.

De la même façon, pour des tôles prélubrifiées avec un film sec à base de polyalkylène glycol, leur mauvaise aptitude au collage observée vis à vis des mastics base caoutchouc est semble-t-il liée à une mauvaise miscibilité ou solubilité de ce film sec avec la résine polybutadiène qui est une résine de base des mastics base caoutchouc.

En conséquence, on pouvait s'attendre à ce qu'un mélange de ces deux composés, un polyéthylène modifié et un polyalkylène glycol, manifeste une incompatibilité à l'égard des colles époxydiques et des colles à base de caoutchouc. Cette incompatibilité étant d'autant plus probable qu'à l'évidence ces deux composés possèdent des réseaux moléculaires respectifs différents. Ils sont en effet tous deux compatibles avec des adhésifs de réseaux moléculaires distincts, l'un avec celui des colles époxydiques et l'autre avec celui des colles à base caoutchouc.

En fait, le résultat observé est tout autre. Cette incompatibilité entre le mélange de polyéthylène modifié et le polyalkylène glycol et les adhésifs époxydiques ou les mastics à base de caoutchouc n'est pas notée.

De manière surprenante, les tôles métalliques enduites du mélange de ces deux composés manifestent avantageusement une bonne aptitude au collage vis-à-vis des adhésifs époxydiques et des mastics à base de caoutchouc.

La présente invention a donc pour premier objet un procédé de traitement de tôles métalliques destiné à protéger leurs surfaces temporairement contre la corrosion et à leur conférer une bonne aptitude à l'emboutissage, au dégraissage et au collage, comprenant l'application sur lesdites tôles d'une composition aqueuse suivie d'un séchage desdites surfaces ainsi traitées jusqu'à obtention d'un film sec caractérisé en ce que ladite composition aqueuse comprend au moins un polyéthylène modifié émulsifiable et un polyalkylène glycol hydrosoluble.

Selon un mode préféré de l'invention, la composition aqueuse comprend en outre au moins un inhibiteur de corrosion dont plus préférentiellement le benzotriazole.

Ces trois composés sont bien entendu associés au sein de ladite composition à un certain nombre d'adjuvants en eux même courants, comme par exemple des agents lubrifiants et/ou des composés tensioactifs pour améliorer l'aptitude à la formation de film, lors de l'application sur les surfaces métalliques.

Par polyéthylène modifié émulsifiable, on entend définir au sens de l'invention, un polyéthylène ayant subi des transformations chimiques en vu de lui conférer une aptitude à s'émulsionner et/ou se disperser en milieu aqueux. Cette transformation peut par exemple consister en un greffage sur la chaîne polyéthylène de groupements fonctionnels oxydants, de type carboxyliques, anhydrides, esters.

De préférence, il possède au moins des fonctions carboxyliques à raison d'environ une fonction acide pour 100 motifs $CH_2$ et de préférence également quelques fonctions esters.

Ces groupements fonctionnels peuvent le cas échéant être, en totalité ou seulement partiellement, neutralisés sous forme de leurs sels par exemple. A cet effet, les fonctions acides sont de préférence neutralisées à raison environ de 35 % en nombre. Cette neutralisation peut par exemple être effectuée par une base de type ammoniaque, éthanolamine ou de préférence morpholine.

Selon un mode privilégié de l'invention, le polyéthylène modifié mis en oeuvre possède un poids moléculaire variant entre environ 5 000 et 20 000 et de préférence entre 10 000 et 20 000. Il s'agit de préférence d'un polyéthylène basse densité et linéaire.

Il est présent dans la composition aqueuse selon l'invention à une quantité comprise entre 20 et 60 %, et de préférence entre 30 et 45 % par rapport au poids de l'extrait sec de ladite composition aqueuse.

Selon un mode de réalisation privilégié de l'invention, le polyéthylène modifié émulsifiable est associé à au moins un agent émulsifiant.

La présence d'un tel agent émulsifiant contribue avantageusement à améliorer le caractère dit émulsifiable du polyéthylène.

Selon un mode préféré de l'invention, cet agent émulsifiant est choisi parmi les alcools gras ou alcoxylats d'alkylphénol. Il s'agit plus préférentiellement d'un alcool gras saturé ou insaturé en $C_8$-$C_{22}$ ou d'un éthoxylat et/ou propoxylat d'un alkylphénol en $C_8$-$C_{22}$. A titre d'agent émulsifiant préféré selon l'invention, on citera tout particulièrement le nonylphénol éthoxylé.

La quantité en agent émulsifiant présente dans la composition aqueuse selon l'invention, est en fait ajustée en fonction de la structure du polyéthylène modifié, de sa quantité et est bien entendu également fonction de la nature de l'agent émulsifiant considéré.

Par exemple, cette quantité en agent émulsifiant peut varier entre environ 0,1 % et 4,5 % en poids de l'extrait sec de la composition aqueuse.

En ce qui concerne le polyalkylène glycol, il s'agit de préférence d'un polyalkylène glycol possédant un poids moléculaire compris entre 10 000 et 20 000. Les polyalkylène glycol de poids moléculaire compris entre 10 000 et 20 000 s'avèrent en effet particulièrement avantageux dans la mesure où ils conduisent à des films lubrifiants très secs et donc dotés de performances améliorées.

Par ailleurs, ce polyalkylène glycol est de préférence sous une forme linéaire.

Le polyalkylène glycol est présent dans la composition aqueuse à raison de 20 à 60 % et de préférence entre 30 et 45 % du poids de l'extrait sec de ladite composition.

Selon un mode préféré de l'invention, le polyéthylène modifié émulsifiable et le polyalkylène glycol sont mélangés dans un rapport pondéral polyéthylène modifié (PEM)/polyalkylène glycol (PAG) compris entre 0,3 et 3 et plus préférentiellement entre 0,8 et 1,3.

Outre les composants discutés ci dessus, la composition aqueuse de traitement de surface selon l'invention contient au moins un inhibiteur de corrosion.

Selon un mode privilégié de l'invention, cet inhibiteur est de préférence le benzotriazole. L'extrait sec de la composition aqueuse contient environ 5 à 20 % et plus préférentiellement 7 à 15 % en poids de benzotriazole.

Le benzotriazole est préalablement à son incorporation, solubilisé dans un solvant polaire, de type alcool et le pH de la solution est ensuite ajusté à la valeur de celui de la composition, par ajout d'une base de type triéthylamine par exemple. De préférence, le benzotriazole et le solvant polaire, comme l'éthanol par exemple, sont mélangés dans un rapport pondéral benzotriazole/éthanol de l'ordre de 0,5.

Bien entendu, il est également envisageable d'associer au benzotriazole, d'autres inhibiteurs de corrosion comme par exemple un acide carboxylique, un alkyl-sulfonate de baryum ou de sodium, le borate d'amine ou un sel d'amine et d'acide gras.

De même, la composition aqueuse selon l'invention peut incorporer d'autres composants classiquement mis en oeuvre dans ce type de formulations, à savoir au moins un agent lubrifiant de type acides gras hydrosolubles ( acide oléique, palmitique, arachique, stéarique, heptanoique) ou un de leurs sels ainsi que des tensioactifs comme les polyoxyéthylènes d'alcool ou d'acides gras et des bactéricides.

L'agent lubrifiant considéré est de préférence incorporé à raison de 1 % à 15 % en poids de l'extrait sec de la composition aqueuse.

L'ensemble des composants est incorporé dans un solvant aqueux et de préférence dans de l'eau. Ce solvant représente environ entre 60 % et 90 % et de préférence entre 70 % et 80 % en poids de la composition aqueuse.

Selon un mode particulier de l'invention, ce solvant aqueux contient outre l'eau, au moins la base utilisée pour neutraliser en partie les fonctions oxydantes du polyéthylène modifié, de préférence la morpholine, et le solvant utilisé pour solubiliser le benzotriazole, de préférence l'éthanol.

A titre d'exemple, l'éthanol peut représenter entre 1 à 30 % et la morpholine entre 0,05 et 3,5 % en poids du solvant aqueux.

De préférence, la composition aqueuse de traitement de la présente invention est obtenue, par mélange d'une première composition aqueuse contenant au moins le polyéthylène modifié émulsifiable, son agent émulsifiant et le cas échéant la base utilisée pour neutraliser en partie ses fonctions oxydantes avec une seconde composition aqueuse contenant au moins le polyalkylène glycol. Le mélange ainsi obtenu est ensuite additivé sous agitation en benzotriazole.

Le pH de la composition aqueuse est de préférence compris entre 7,5 et 10.

A titre de composition préférée selon l'invention, on peut plus particulièrement mentionner celle comprenant au moins :

- 8 à 10 % d'un polyéthylène modifié, portant au moins une fonction carboxylique pour 100 motifs $CH_2$ et de poids moléculaire compris entre 10 000 et 20 000,
- 8 à 10 % d'un polyalkylène glycol de poids moléculaire compris entre 10 000 et 20 000,
- 2,3 à 3,3 % de benzotriazole,
- 0,15 à 0,25 % de nonylphénol éthoxylé,
- 1 à 2 % d'oléate de sodium et d'acide stéarique,
- 67 à 73 % d'eau,
- 0,4 à 0,8 % de morpholine,
- 4,7 à 6,7 % d'éthanol, et
- des traces de triéthylamine.

La présente invention a également pour objet la composition aqueuse de traitement des surfaces des tôles métalliques mise en oeuvre dans le procédé revendiqué.

La composition selon l'invention est bien entendu applicable à la surface des tôles par tout moyen conventionnel approprié, de type dispositif de revêtement au rouleau ou analogue, de manière à l'y déposer sous la forme d'un film humide dont la densité surfacique est comprise entre 1 et 30 $g/m^2$ et de préférence varie entre 2,5 $g/m^2$ et 15 $g/m^2$. La tôle ainsi traitée, subit ensuite un séchage afin d'obtenir un film prélubrifiant sec, conforme à l'invention.

Ce séchage peut être, par exemple, réalisé en portant la tôle traitée à une température comprise entre 50 et 100°C pendant un temps variant entre environ 2 secondes à 10 minutes.

De préférence la densité surfacique du film sec à la surface de la tôle varie entre 0,5 $g/m^2$ et 3 $g/m^2$ et plus préférentiellement est de l'ordre de 1,5 $g/m^2$.

La présente invention a également pour objet une tôle métallique revêtue d'un film prélubrifiant sec obtenue conformément au procédé revendiqué.

Au sens de l'invention, on entend couvrir par "tôles métalliques", des tôles minces laminées à chaud, des tôles d'acier laminées à froid ainsi que divers genres de tôles d'acier revêtues d'une couche métallique. Il peut notamment s'agir de tôles d'acier électrozingué ou de tôles galvanisées à base d'alliage de type Zinc-Fer.

Comme énoncé précédemment, les tôles revêtues d'un film prélubrifiant sec de composition telle que définie selon l'invention, s'avèrent résistantes à la corrosion et manifestent une bonne aptitude à l'emboutissage, à la dégrassaibilité et au collage.

La présente invention s'étend en particulier à l'utilisation d'une composition telle que définie ci-dessus c'est-à-dire comprenant au moins un polyéthylène modifié émulsifiable et un polyalkylène glycol hydrosoluble pour traiter la surface de tôles métalliques destinées notamment à être enduites consécutivement ou ultérieurement avec au moins un revêtement organique annexe.

Au sens de la présente invention on entend désigner par un revêtement organique annexe des revêtements de type adhésif comme notamment les colles époxydiques ou de type caoutchouc.

La composition selon l'invention présente en effet l'avantage de manifester de bonnes propriétés d'adhérence vis à vis des revêtements organiques et tout particulièrement de présenter une bonne aptitude au collage.

Par bonne aptitude au collage, on entend faire référence selon l'invention aux bonnes propriétés d'adhérence, manifestées par les tôles prélubrifiées selon le procédé revendiqué vis-à-vis des adhésifs.

Avantageusement, il existe une bonne compatibilité entre les réseaux moléculaires du film appliqué selon l'invention et de nombreux adhésifs.

Contrairement aux films secs prélubrifiants classiques, les tôles revêtues de films conformes à l'invention s'avèrent compatibles avec des adhésifs de natures chimiques très distinctes de type par exemple adhésifs époxydiques et mastics à base de caoutchouc, non gonflants ou gonflants. Comme il ressort des exemples figurant ci-après, on observe une bonne adhérence entre les tôles prélubrifiées par l'application d'un film selon l'invention et ces adhésifs et ceci même après exposition de la jonction entre la tôle prélubrifiée avec le film et le revêtement adhésif considéré, à un cycle de vieillissement.

Les adhésifs époxydiques sont plus particulièrement destinés aux applications de collage structural et semi-structural en vue de construire des structures métalliques. Quant aux mastics à base de caoutchouc, ils répondent aux fonctions d'étanchéité et de calage. Ces deux familles d'adhésifs sont en fait représentatives des adhésifs permettant de répondre à l'ensemble des fonctions demandées aux liaisons collées de caisses automobiles "aciers". De part son caractère universel, le film déposé en surface des tôles métalliques selon l'invention s'avère donc particulièrement avantageux sur le plan économique.

Qui plus est, il confère aux tôles sur lesquelles il est appliqué, une bonne aptitude à l'emboutissage et s'avère également 100% dégraissable, avant et après, l'étuvage de ces tôles.

La présente invention a également pour objet l'utilisation de tôles métalliques revêtues d'un film conforme à l'invention pour réaliser des pièces nécessitant un assemblage par collage. Les opérations de collage peuvent mettre indifféremment en oeuvre une colle de type époxy ou une colle de type caoutchouc.

D'autres avantages du procédé revendiqué apparaîtront à la lecture des exemples et figures, présentés ci-après à titre illustratif et non limitatif de l'invention.

FIGURES

Figure 1 : Représentation d'une éprouvette.

Figure 2 : Latitude de réglage de la force de serre-flan, établie pour une tôle revêtue d'un film obtenu selon l'invention au regard de tôles témoins.

MATERIELS ET METHODES

A - <u>MATERIELS</u>

- A titre de formulations témoins, il est mis en oeuvre dans les exemples ci-après deux compositions commercialisées par la société CASTROL et respectivement référencées AQUACOAT BEIGE® (Témoin 1) et KS5® (Témoin 2).

- Deux grandes familles d'adhésifs sont utilisées :
  Les résines époxydiques :
  Elles résultent de la réaction de l'épichlorhydrine sur la molécule de bisphénol A et sont composées de Di Glycidyl Ether de Bisphénol A (DGEBA) et d'un durcisseur aminé, généralement la Dicyandiamine. Les adhésifs époxydiques contiennent également des charges minérales à raison de 30 à 50 % du poids total de la formulation. A titre représentatif de ces résines époxydiques il a été utilisé l'adhésif XB5321® fabriqué par CIBA (Epoxy).
  Les mastics d'étanchéité :
  En général, ces formulations sont à base de caoutchouc polybutadiène vulcanisé à base de soue. Elles contiennent 50% de charge minérale et parfois une très faible proportion d'accélérateur. A titre représentatif de ces mastics, il a été mis en oeuvre un mastic à base caoutchouc non-gonflant, l'IMPERMASTIC® 1987/Q de SAIM (Mastic non gonflant) et un mastic à base caoutchouc gonflant le 90020/FR425® fabriqué par EMS TOGO (Mastic gonflant).

- Le substrat testé est une tôle galvanisée, de qualité automobile. L'épaisseur de revêtement zingué est d'environ 10 μm et le paramètre de rugosité Ra est de l'ordre de 1,2 μm. L'acier de base est un acier doux, de type ES de limite élastique d'environ 180 MPa. Ce choix a été motivé par le fait que les collages sur ce type de substrats sont les plus difficiles à réaliser.

B - <u>METHODES</u>

**1 Protocole de dépôt d'une composition aqueuse à la surface d'une tôle.**

La formulation à tester est déposée à la surface des tôles en acier galvanisées à l'aide d'un système roll-coat. En contrôlant la vitesse de rotation du rouleau inférieur et la pression exercée sur l'échantillon par le cylindre supérieur, il est possible d'obtenir la densité surfacique de film sec désirée. Dans le cadre des essais réalisés, la densité surfacique ajustée à la surface de la tôle galvanisée à l'issue d'un séchage du film humide pendant 5 mn à 60°C en étuve ventilée est de 1,5 g/m$^2$.
Les dimensions des échantillons recouverts de film sec sont de 150 x 150 mm$^2$. Les plaques ainsi traitées, protégées par un papier d'aluminium, sont ensuite redécoupées afin d'obtenir des éprouvettes utilisables pour les différents tests discutés dans les exemples ci-après.
A titre de comparaison, il est appliqué les deux formulations témoins sur des tôles d'acier galvanisées.
Dans le cas particulier de la formulation témoin 1 le dépôt sur plaques est effectué à l'aide d'un barre-coater. On dépose 6μm de film liquide pour obtenir un film sec de 2 g/m$^2$ et la plaque traitée est ensuite séchée en étuve ventilée pendant 3 minutes à 60°C.
Quant à la formulation témoin 2, elle est appliquée selon le protocole décrit pour la formulation conforme à l'invention. La densité surfacique du film sec déposé est de 1,5 g/m$^2$.

**2 Protocole d'évaluation de l'aptitude au collage d'une tôle prélubrifiée avec un film sec.**

Le protocole retenu est le test de traction-cisaillement sur des éprouvettes dont une seule face est recouverte du film à tester. Ce test, couramment employé dans le domaine du collage pour apprécier le comportement global du joint collé est en outre fréquemment utilisé pour évaluer le niveau d'adhésion d'une colle sur un substrat.

a) <u>Préparation des éprouvettes</u>

On applique un joint de colle ou de mastic, de géométrie parallélépipédique, entre deux substrats en tôles d'acier. L'ensemble constitue une éprouvette de traction-cisaillement dite à simple recouvrement.
Les dimensions de l'éprouvette et du joint collé sont normalisées comme suit :

Dimensions des substrats :

- longueur 100 mm
- largeur 25 mm

Dimensions du joint collé :

- 0,2 mm d'épaisseur avec un recouvrement de 12,5 mm pour les résines époxydiques
- 2 mm d'épaisseur avec un recouvrement de 20 mm pour les mastics.

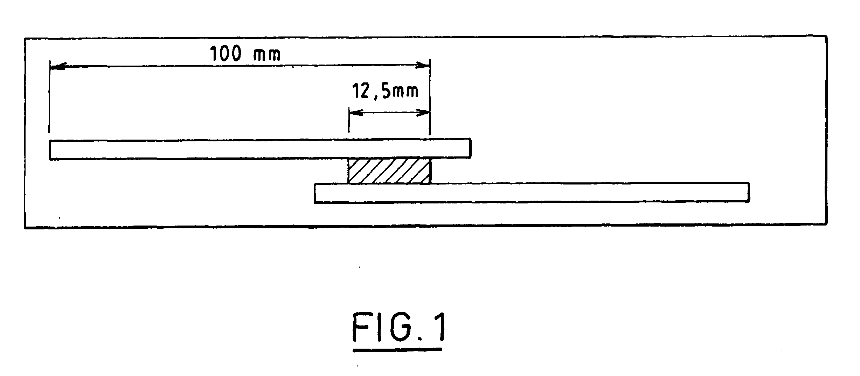

La figure 1 représente une telle éprouvette dans le cas où l'adhésif utilisé est une résine époxydique.
Toutes les éprouvettes collées sont réticulées par application d'un cycle de chauffage composé d'un palier de 30 mn à 180° C. Au total, 10 éprouvettes sont réalisées par configuration. Les cinq premières seront rompues à l'état initial "ou non-vieillies" c'est-à-dire 24 heures après avoir subi le cycle de chauffage. Les éprouvettes restantes seront en revanche rompues après avoir subi un cycle de vieillissement accéléré.

b) Réalisation du cycle de vieillissement accéléré

Ce cycle de vieillissement accéléré permet d'apprécier la durabilité des liaisons collées dans un environnement agressif. Dans le cadre de la présente étude, un cataplasme humide de 14 jours a été retenu comme cycle de vieillissement accéléré.

Cinq éprouvettes sont disposées dans du coton hydrophile et introduites dans un sachet de polyéthylène. On ajoute un volume d'eau équivalent au poids du coton multiplié par 12. Le sac est fermé hermétiquement et placé dans une étuve à 70°C pendant "14 jours".

Ensuite, les éprouvettes sont placées rapidement "en moins de deux minutes" dans une enceinte refroidie à - 20°C et y séjournent pendant deux heures jusqu'à congélation du coton. Les éprouvettes sont ensuite sorties de l'enceinte et laissées à décongeler à température ambiante. Elles sont ultérieurement sorties du coton et séchées à l'air comprimé. Le test de traction-cisaillement s'effectue alors dans les 2 à 4 heures suivantes.

c) Réalisation du test de traction-cisaillement

L'éprouvette à tester est soumise à une sollicitation en traction. Les efforts au niveau de la liaison sont mixtes : traction et cisaillement. Les efforts de traction sont des efforts orientés perpendiculairement au plan du joint collé et les efforts de cisaillement sont orientés parallèlement au plan du joint collé. La liaison est caractérisée par la contrainte de cisaillement à la rupture Rtc ( effort de rupture divisé par la section collée).

d) Exploitation des résultats :

La caractérisation de l'aptitude au collage de la tôle prélubrifiée testée se fait en considérant :

- les niveaux des contraintes de cisaillement à la rupture Rtc pour les états, non-vieillis et vieillis des joints collés,
- la chute de tenue mécanique entre l'état non-vieilli "H0" et l'état vieilli "H14" ou variation de tenue mécanique, figurant respectivement dans les tableaux I et II ci-après, est évaluée de la manière suivante :

$$[Rtc(H14)-Rtc(H0)]/Rtc(H0),$$

- les faciès de rupture des éprouvettes rompues, avant et après vieillissement, sont évalués par observation visuelle.

La rupture d'un joint collé peut être adhésive, cohésive ou mixte en fonction du lieu où s'est effectuée la propagation de la fissure. On considèrera donc que :

- lorsque la rupture a lieu à l'interface colle-substrat elle est dite adhésive, RA,
- lorsque la rupture a lieu dans l'adhésif, elle est dite cohésive RC,
- lorsqu'elle se produit dans l'adhésif très près de l'interface, elle est alors dite cohésive superficielle, RCS,
- lorsque la rupture se produit à la fois dans la colle et à l'interface colle-substrat, elle est dite mixte.

Il a ainsi été défini quatre niveaux d'aptitude au collage des tôles. Ces niveaux sont présentés dans le tableau I ci-après et seront utilisés dans les exemples qui suivent pour caractériser l'aptitude au collage des tôles d'acier testées. Les niveaux de pourcentage indiqués dans les colonnes relatives au faciès de rupture, ont comme référence la surface de la liaison collée.

TABLEAU I

| Aptitude au collage | Contrainte de cisaillement moyenne avant et après vieillissement (MPa) | | | faciès de rupture avant vieillissement | faciès de rupture après vieillissement | chute de tenue mécanique entre H0 et H14 $\frac{Rtc(H14)-Rtc(H0)}{Rtc(H0)}$ |
|---|---|---|---|---|---|---|
| | Epoxy | Mastic non gonflant | Mastic gonflant | | | |
| très bonne | $\geq 4,5$ | $\geq 2,5$ | $\geq 0,4$ | RA = 0 % | RA ≤ 10 % | ≤ 10 % |
| bonne | $\geq 4,5$ | $\geq 2,5$ | $\geq 0,4$ | RA ≤ 10 % | 10 < RA ≤ 20 % | 10 < et ≤ 20 % |
| mauvaise | < 4,5 | < 2,5 | < 0,4 | 10 < RA ≤ 20 % | 20 < RA ≤ 50 % | 20 < et ≤ 40 % |
| très mauvaise | < 4,5 | < 2,5 | < 0,4 | RA > 50 % | RA > 50 % | > 40 % |

EP 0 897 969 B1

### 3 - Etablissement du diagramme d'emboutissabilité :

L'emboutissage consiste à transformer des tôles planes en surface non développables. Un bon emboutissage résulte d'un compromis entre deux tendances : l'une est la rupture et l'autre le plissement.

L'aptitude à l'emboutissage d'une tôle prélubrifiée peut être caractérisée par la détermination de sa latitude de réglage de la force de serre-flan.

Pour ce faire des flans circulaires sont emboutis afin d'obtenir des godets à fond plat. Dans ce test, le mode de déformation qui affecte principalement la tôle est le rétreint. Le rétreint est le mode de déformation le plus fréquemment rencontré dans les opérations d'emboutissage de l'industrie automobile.

La mesure de la latitude de réglage de la force de serre-flan permet donc de juger de la qualité de la tôle prélubrifiée vis-à-vis du rétreint. Sur les presses d'emboutissage industrielles, l'un des seuls paramètres que l'on puisse faire varier est précisément cette force de serre-flan FSF. La force de serre-flan est la force qui maintient le flan sans pour cela l'immobiliser.

Pour déterminer cette latitude de réglage, on recherche donc la valeur maximale de la force de serre-flan au-dessus de laquelle le godet casse ainsi que sa valeur minimale au-dessous de laquelle des plis apparaissent. Cette recherche est effectuée pour différents rapports d'emboutissage $\beta$.

Le rapport d'emboutissage $\beta$ est égal au rapport du diamètre initial du flan circulaire D sur le diamètre de la matrice d'emboutissage d. Ce rapport d'emboutissage est donc imposé en utilisant des diamètres différents de matrice d'emboutissage pour un même diamètre de flan circulaire.

On établit ainsi un diagramme représentant deux courbes qui sont en règle générale deux droites. La courbe haute représente l'évolution de la valeur maximale de la force de serre-flan et la courbe basse représente l'évolution de la valeur minimale de la force de serre-flan. Quand le rapport d'emboutissage $\beta$ augmente, ces deux courbes convergent en un point qui est le rapport d'emboutissage limite ($\beta$ max). A ce point de convergence et pour des rapports d'emboutissage supérieurs, il n'est plus possible d'obtenir un godet qui ne soit ni plissé ni cassé.

Une bonne aptitude à l'emboutissage d'une tôle prélubrifiée avec un film sec se traduit sur le diagramme ainsi établi par un rapport d'emboutissage limite ($\beta$ max) élevé et par un angle d'ouverture élevé entre la courbe limite de plis (courbe basse) et la courbe limite de casse (courbe haute). En effet, plus l'angle entre les courbes limites de plis et de casse sera ouvert, plus l'opérateur sur presse d'emboutissage aura de latitude pour régler les paramètres d'emboutissage d'une pièce. Par ailleurs plus le rapport d'emboutissage limite est élevé, plus la tôle prélubrifiée testée est performante vis-à-vis de l'emboutissage (rétreint).

### EXEMPLE 1 :

### Préparation d'une composition aqueuse de traitement de surface conforme à l'invention.

On prépare une composition aqueuse conforme à l'invention à partir du mélange de deux compositions dites composition 1 et composition 2 et d'une solution (solution 3).

La composition 1 contient le polyéthylène modifié, le nonylphénol éthoxylé, la morpholine et de l'eau. Les pourcentages massique de ces différents constituants (par rapport à la masse MI de la composition 1) sont indiqués ci-après :

| | |
|---|---|
| Polyéthylène modifié, portant au moins une fonction carboxylique pour 100 motifs $CH_2$ et de poids moléculaire compris entre 10 000 et 20 000 | 17,8 à 21,5 % |
| Nonylphénol éthoxylé | 0,33 à 0,53 % |
| Morpholine | 0,9 à 1,72 % |
| Eau | 71,1 à 75,2 % |

La composition 2, contient le polyalkylène glycol, l'oléate de sodium et de l'eau. Les pourcentages massiques de ces différents constituants sont indiqués ci-après. Ils sont exprimés par rapport à la masse M2 de la composition 2.

| | |
|---|---|
| Polyalkylène glycol de poids moléculaire compris entre 10 000 et 20 000 | 17,8 à 21,5 % |
| Oléate de sodium | 2,25 à 4,30 % |
| Eau | 77,8 à 81,7 % |

La solution 3 est constituée de benzotriazole en solution dans de l'éthanol, dans un rapport pondéral (benzotriazole/éthanol) voisin de 0,5. Le mélange benzotriazole/éthanol une fois réalisé, est porté au pH du mélange des deux compositions (1 et 2) par l'ajout de triéthylamine à une quantité inférieure à 0,03 % du volume d'éthanol utilisé.

Pour obtenir la composition aqueuse finale, on mélange tout d'abord les deux compositions 1 et 2, sous agitation magnétique. Le rapport pondéral du mélange est de 1. Puis on ajoute la solution 3, au mélange des compositions toujours sous agitation magnétique. La quantité de solution 3 ajoutée représente entre 7 et 10 % de la masse totale du mélange final réalisé (composition 1 + composition 2 + solution 3).

On obtient ainsi une composition comprenant 45,0 à 46,5 % en poids en composition 1, 45 à 46,5 % en poids en composition 2 et 7 à 10 % en poids, en solution 3.

Plus précisément, elle est composée de :

- 8 à 10 % de polyéthylène modifié, portant au moins une fonction carboxylique pour 100 motifs $CH_2$ et de poids moléculaire compris entre 10 000 et 20 000,
- 0,15 à 0,25 % de nonylphénol éthoxylé,
- 0,4 à 0,8 % de morpholine,
- 8 à 10 % de polyalkylène glycol de poids moléculaire compris entre 10 000 et 20 000,
- 1 à 2 % d'oléate de sodium,
- 67 à 73 % d'eau,
- 2,3 à 3,3 % de benzotriazole,
- 4,7 à 6,7 % d'éthanol, et
- des traces de triéthylamine.

<u>EXEMPLE 2</u> :

<u>Analyse de l'aptitude au collage de tôles galvanisées revêtues d'un film prélubrifiant selon l'invention.</u>

Le film prélubrifiant selon l'invention, ainsi que les deux films témoins, sont déposés sur des tôles galvanisées selon le protocole défini précédemment dans "Matériels et Méthodes".

Les aptitudes au collage de chacune des tôles ainsi traitées sont appréciées conformément au protocole décrit dans "Matériels et Méthodes". Elles figurent dans le tableau II ci-après.

TABLEAU II

| Surfaces testées | Adhésifs testés | Etat H0 | | Etat H14 | | Variation de tenue mécanique (%) | Aptitude au collage |
|---|---|---|---|---|---|---|---|
| | | Rtc (MPa) | faciès de rupture | Rtc (MPa) | faciès de rupture | | |
| galvanisées Témoin 1 | Epoxy | 0->2,8 | RA | 3,9±0,3 | RA | - | Très mauvaise |
| | Mastic non gonflant | 3,0±0,1 | 90%RCS + 10%RA | 2,9±0,1 | RCS | -3 | Bonne |
| | mastic gonflant | 0,65±0,03 | RCS | 0,70±0,02 | RCS | +12 | Très bonne |
| galvanisées + témoin 2 | Epoxy | 9,4±0,4 | RCS | 9,7±0,4 | RCS | 0 | Très bonne |
| | Mastic non gonflant | 3,8±0,1 | RCS | 2,8±0,2 | RCS | -27 | Mauvaise |
| | mastic gonflant | 0,33±0,04 | RCS | 0,68±0,02 | RCS | +100 | Mauvaise |
| galvanisées + film selon l'invention | Epoxy | 8,6±0,1 | RCS | 7,3±0,3 | RCS | -15 | Bonne |
| | Mastic non gonflant | 3,7±0,1 | RCS | 3,2±0,2 | 95% RCS +5%RA | -16 | Bonne |
| | mastic gonflant | 0,42±0,02 | RCS | 0,67±0,1 | RCS | +60 | Très bonne |

EP 0 897 969 B1

La variation de la tenue mécanique est évaluée de la manière suivante ; $(Rtc(H_{14})-Rtc(H_0))/Rtc(H_0)$.

Les résultats montrent que seule la tôle prélubrifiée, par application d'un film selon le protocole de l'invention, présente une bonne aptitude au collage et ceci quelque soit la nature de l'adhésif testé.

En ce qui concerne la tôle prélubrifiée avec la formulation témoin 1, elle présente une bonne aptitude au collage avec les deux mastics à base caoutchouc mais en revanche une mauvaise aptitude au collage avec l'adhésif époxydique

En ce qui concerne la tôle prélubrifiée avec la formulation témoin 2, on observe une mauvaise aptitude au collage avec les deux mastics à base de caoutchouc. Ceci se traduit avec le mastic non gonflant, par une forte chute relative de la tenue mécanique entre l'état non-vieilli et l'état vieilli et avec le mastic gonflant, une tenue mécanique à l'état initial très inférieure à la valeur minimale acceptable de 0,4 MPa. La tôle prélubrifiée présente en revanche une bonne aptitude au collage avec l'adhésif époxydique.

EXEMPLE 3 :

Détermination de l'aptitude à l'emboutissage d'une tôle revêtue d'un film obtenu selon l'invention.

L'appréciation de l'emboutissabilité est effectuée selon le protocole décrit dans le chapitre précédent "Matériels et Méthodes". Cette aptitude a été appréciée au regard d'une tôle recouverte du film témoin 1 et d'une autre formulation à base de teflon.

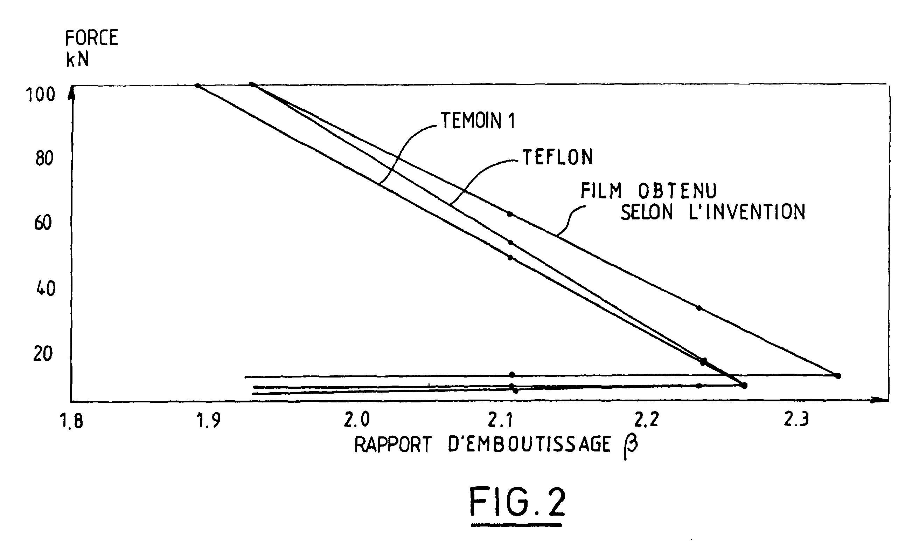

Les latitudes de réglage de la force de serre-flan sont présentées en figure 2.

Ce diagramme met en évidence l'excellent pouvoir lubrifiant du film sec selon l'invention. C'est en effet avec la tôle recouverte du film conforme à l'invention que l'on observe la valeur la plus importante du rapport d'emboutissage limite $\beta$ max et un angle d'ouverture élevé entre la courbe limite de plis (courbe basse) et la courbe limite de casse (courbe haute). Comme il a été énoncé précédemment, plus l'angle entre ces deux courbes limites est ouvert, plus l'opérateur de presse de la latitude pour régler les paramètres d'emboutissage. Par ailleurs plus le rapport d'emboutissage limite est élevé, plus la tôle prélubrifiée est performante vis-à-vis de l'emboutissage.

EXEMPLE 4 :

Appréciation de l'aptitude du film sec obtenu selon l'invention a être dégraissé.

Cet essai vise à apprécier l'aptitude du film sec à être éliminé par les bains de traitement de surface, précédant notamment les étapes de mise en peinture automobile. Deux configurations sont testées : avant et après un étuvage de l'échantillon d'un film sec à 160° C pendant 15 minutes.

Les éprouvettes de dimensions 90 x 190 $mm^2$, obtenues selon le protocole décrit dans "Matériels et Méthodes", sont immergées, à 60°C durant 3 minutes, dans un bain de dégraissage alcalin de composition comme suit :

-   Métasilicate de soude (65 g/1)
-   Tripolyphosphate de sodium (7 g/l)
-   Acide nitriloacétique (2g/l)
-   Nonylphénol (4 g/1)
-   eau de ville de dureté 20 à 30 THR

Les éprouvettes subissent un premier rinçage par immersion dans de l'eau de ville à température ambiante pendant 1 minute, puis un second rinçage sous l'eau courante pendant 30 secondes. La cotation de dégraissabilité consiste à évaluer le rapport de surface bien dégraissée (quand la surface est dégraissée, la mouillabilité est bonne et le film d'eau est continu) sur la surface totale de la face de l'échantillon examiné.

Le test de dégraissabilité est effectué sur des échantillons recouverts de film sec ayant et n'ayant pas subi d'étuvage à 160 °C. Trois plaques sont testées par configuration. Le film sec selon l'invention s'avère 100 % dégraissable avant et après étuvage.

**Revendications**

1.   Procédé de traitement de tôles métalliques destiné à protéger leurs surfaces temporairement contre la corrosion et à leur conférer une bonne aptitude à l'emboutissage, au dégraissage et au collage, comprenant l'application sur lesdites tôles d'une composition aqueuse suivie d'un séchage desdites surfaces ainsi traitées jusqu'à obtention d'un film sec caractérisé en ce que ladite composition comprend au moins un polyéthylène modifié émulsifiable

EP 0 897 969 B1

et un polyalkylène glycol hydrosoluble.

2. Procédé selon la revendication 1, caractérisé en ce que la composition aqueuse comprend en outre au moins un inhibiteur de corrosion.

3. Procédé selon la revendication 2, caractérisé en ce qu'il s'agit du benzotriazole.

4. Procédé selon l'une des revendications précédentes, caractérisé en ce que le polyéthylène modifié possède des groupements fonctionnels oxydants de type carboxyliques, anhydrides, esters.

5. Procédé selon l'une quelconque des revendications 1 à 4, caractérisé en ce que le polyéthylène modifié possède au moins des fonctions carboxyliques à raison d'environ une fonction acide pour 100 motifs $CH_2$.

6. Procédé selon la revendication 5, caractérisé en ce que le polyéthylène modifié comprend également quelques fonctions esters.

7. Procédé selon la revendication 4 ou 5, caractérisé en ce que ces groupements sont en totalité ou partiellement neutralisés sous forme de leurs sels.

8. Procédé selon la revendication 7, caractérisé en ce que la neutralisation est effectuée avec de la morpholine.

9. Procédé selon l'une quelconque des revendications précédentes, caractérisé en ce que le polyéthylène modifié possède un poids moléculaire compris entre environ 5 000 et 20 000 et de préférence entre 10 000 et 20 000.

10. Procédé selon l'une des revendications 1 à 9, caractérisé en ce que le polyéthylène modifié émulsifiable est associé à au moins un agent émulsifiant.

11. Procédé selon l'une des revendications précédentes, caractérisé en ce que l'agent émulsifiant est un alcool gras ou un alcoxylat d'alkylphénol.

12. Procédé selon l'une quelconque des revendications 1 à 11, caractérisé en ce que le polyalkylène glycol possède un poids moléculaire compris entre 10 000 et 20 000.

13. Procédé selon l'une quelconque des revendications précédentes, caractérisé en ce que le polyalkylène glycol est de préférence linéaire.

14. Procédé selon l'une quelconque des revendications précédentes, caractérisé en ce que l'extrait sec de la composition aqueuse comprend entre 20 % et 60 % et de préférence entre 30 % et 45 % en poids de polyéthylène modifié.

15. Procédé selon l'une quelconque des revendications précédentes, caractérisé en ce que l'extrait sec de la composition aqueuse comprend entre 20 et 60 % et de préférence entre 30 % et 45 % en poids de polyalkylène glycol.

16. Procédé selon l'une quelconque des revendications précédentes, caractérisé en ce que le polyéthylène modifié et le polyalkylène glycol y sont présents dans un rapport pondéral PEM/PAG compris entre 0,3 et 3 et de préférence entre 0,8 et 1,3.

17. Procédé selon l'une quelconque des revendications précédentes, caractérisé en ce que l'extrait sec de la composition aqueuse comprend entre 5 à 20 % et de préférence entre 7 à 15 % en poids de benzotriazole.

18. Procédé selon l'une quelconque des revendications précédentes caractérisé en ce que la composition comprend environ entre 60 et 90 % et de préférence entre 70 et 80 % en poids de solvant aqueux.

19. Procédé selon l'une des revendications précédentes, caractérisé en ce que la composition aqueuse comprend de préférence au moins :

- 8 à 10 % d'un polyéthylène modifié, portant au moins une fonction carboxylique pour 100 motifs $CH_2$ et de poids moléculaire compris entre 10 000 et 20 000,
- 8 à 10 % d'un polyalkylène glycol de poids moléculaire compris entre 10 000 et 20 000,

- 2,3 à 3,3 % de benzotriazole,
- 0,15 à 0,25 % de nonylphénol éthoxylé,
- 1,0 à 2,0 % d'oléate de sodium et d'acide stéarique,
- 67 à 73 % d'eau,
- 0,4 à 0,8 % de morpholine,
- 4,7 à 6,7 % d'éthanol, et
- des traces de triéthylamine.

20. Procédé selon l'une quelconque des revendications précédentes caractérisé en ce que le film sec est appliqué à la surface de la tôle avec une densité surfacique comprise entre 0,5 g/m$^2$ et 3 g/m$^2$.

21. Composition aqueuse de traitement des surfaces de tôles métalliques telle que définie dans les revendications 1 à 20.

22. Tôle métallique revêtue d'un film prélubrifiant sec obtenu selon le procédé défini selon l'une des revendications 1 à 20 ou à partir d'une composition selon la revendication 21.

23. Utilisation d'une tôle métallique selon la revendication 22 pour réaliser des pièces nécessitant un assemblage par collage.

24. Utilisation selon la revendication 23 caractérisée en ce que l'opération de collage met en oeuvre une colle de type époxy.

25. Utilisation selon la revendication 23 caractérisée en ce que le collage met en oeuvre une colle de type caoutchouc.


**Patentansprüche**

1. Verfahren zur Behandlung von Metallblechen, welches dazu bestimmt ist, deren Oberflächen kurzzeitig gegen Korrosion zu schützen und ihnen gute Tiefzieh-, Entfettungs- und Klebefähigkeit zu verleihen, und welches das Aufbringen, auf diese Bleche, einer wässerigen Zusammensetzung, gefolgt von einer Trocknung der so behandelten Oberflächen bis zur Erlangung eines trockenen Films umfaßt, dadurch gekennzeichnet, daß die Zusammensetzung wenigstens ein emulgierbares modifiziertes Polyethylen und ein wasserlösliches Polyalkylenglykol umfaßt.

2. Verfahren nach Anspruch 1, dadurch gekennzeichnet, daß die wässerige Zusammensetzung ferner wenigstens einen Korrosionshemmer enthält.

3. Verfahren nach Anspruch 2, dadurch gekennzeichnet, daß es sich um Benzotriazol handelt.

4. Verfahren nach einem der vorstehenden Ansprüche, dadurch gekennzeichnet, daß das modifizierte Polyethylen oxidierende Funktionsgruppen vom Carboxyl-, Anhydrid-, Estertyp besitzt.

5. Verfahren nach irgendeinem der Ansprüche 1 bis 4, dadurch gekennzeichnet, daß das modifizierte Polyethylen wenigstens Carboxylgruppen im Verhältnis von etwa einer Säuregruppe auf 100 Grundeinheiten CH$_2$ besitzt.

6. Verfahren nach Anspruch 5, dadurch gekennzeichnet, daß das modifizierte Polyethylen auch einige Estergruppen aufweist.

7. Verfahren nach Anspruch 4 oder 5, dadurch gekennzeichnet, daß diese Gruppen insgesamt oder teilweise in Form ihrer Salze neutralisiert sind.

8. Verfahren nach Anspruch 7, dadurch gekennzeichnet, daß die Neutralisation mit Morpholin erfolgt.

9. Verfahren nach irgendeinem der vorstehenden Ansprüche, dadurch gekennzeichnet, daß das modifizierte Polyethylen ein Molekulargewicht zwischen etwa 5000 und 20000 und vorzugsweise zwischen 10000 und 20000 besitzt.

10. Verfahren nach einem der Ansprüche 1 bis 9, dadurch gekennzeichnet, daß das emulgierbare modifizierte Polye-

14

# EP 0 897 969 B1

thylen mit wenigstens einem Emulgator zusammengelagert ist.

11. Verfahren nach einem der vorstehenden Ansprüche, dadurch gekennzeichnet, daß der Emulgator ein Fettalkohol oder ein Alkylphenolalkoxylat ist.

12. Verfahren nach irgendeinem der Ansprüche 1 bis 11, dadurch gekennzeichnet, daß das Polyalkylenglykol ein Molekulargewicht zwischen 10000 und 20000 besitzt.

13. Verfahren nach irgendeinem der vorstehenden Ansprüche, dadurch gekennzeichnet, daß das Polyalkylenglykol vorzugsweise linear ist.

14. Verfahren nach irgendeinem der vorstehenden Ansprüche, dadurch gekennzeichnet, daß der Trockenauszug der wässerigen Zusammensetzung zwischen 20 und 60 und vorzugsweise zwischen 30 und 45 Gew.-% modifiziertes Polyethylen aufweist.

15. Verfahren nach irgendeinem der vorstehenden Ansprüche, dadurch gekennzeichnet, daß der Trockenauszug der wässerigen Zusammensetzung zwischen 20 und 60 und vorzugsweise zwischen 30 und 45 Gew.-% Polyalkylenglykol aufweist.

16. Verfahren nach irgendeinem der vorstehenden Ansprüche, dadurch gekennzeichnet, daß das modifizierte Polyethylen und das Polyalkylenglykol dort in einem Gewichtsverhältnis MPE/PAG zwischen 0,3 und 3 und vorzugsweise zwischen 0,8 und 1,3 zugegen sind.

17. Verfahren nach irgendeinem der vorstehenden Ansprüche, dadurch gekennzeichnet, daß der Trockenauszug der wässerigen Zusammensetzung zwischen 5 und 20 und vorzugsweise zwischen 7 und 15 Gew.-% Benzotriazol enthält.

18. Verfahren nach irgendeinem der vorstehenden Ansprüche, dadurch gekennzeichnet, daß die Zusammensetzung etwa zwischen 60 und 90 und vorzugsweise zwischen 70 und 80 Gew.-% wässeriges Lösungsmittel enthält.

19. Verfahren nach irgendeinem der vorstehenden Ansprüche, dadurch gekennzeichnet, daß die wässerige Zusammensetzung vorzugsweise wenigstens

   - 8 bis 10 % eines modifizierten Polyethylens, welches wenigstens eine Carboxylgruppe auf 100 Grundeinheiten $CH_2$ trägt, und mit einem Molekulargewicht zwischen 10000 und 20000,
   - 8 bis 10 % eines Polyalkylenglykols mit einem Molekulargewicht zwischen 10000 und 20000,
   - 2,3 bis 3,3 % Benzotriazol,
   - 0,15 bis 0,25 % ethoxyliertes Nonylphenol,
   - 1,0 bis 2,0 % Natriumoleat und Stearinsäure,
   - 67 bis 73 % Wasser,
   - 0,4 bis 0,8 % Morpholin,
   - 4,7 bis 6,7 % Ethanol, und
   - Spuren von Triethylamin

enthält.

20. Verfahren nach irgendeinem der vorstehenden Ansprüche, dadurch gekennzeichnet, daß der Trockenfilm auf der Blechoberfläche mit einer Oberflächendichte zwischen 0,5 g/m$^2$ und 3 g/m$^2$ aufgebracht wird.

21. Wässerige Zusammensetzung zur Behandlung von Oberflächen von Metallblechen, wie sie in den Ansprüchen 1 bis 20 definiert ist.

22. Metallblech, welches mit einem vorschmierenden Trokkenfilm beschichtet ist, der nach dem gemäß einem der Ansprüche 1 bis 20 definierten Verfahren oder anhand einer Zusammensetzung gemäß Anspruch 21 gewonnen ist.

23. Verwendung eines Metallblechs gemäß Anspruch 22 zur Herstellung von Teilen, die ein Zusammenfügen durch Kleben erfordern.

15

24. Verwendung nach Anspruch 23, dadurch gekennzeichnet, daß der Klebevorgang einen Klebstoff vom Epoxytyp benutzt.

25. Verwendung nach Anspruch 23, dadurch gekennzeichnet, daß die Klebung einen Klebstoff vom Kautschuktyp benutzt.


**Claims**

1. Process for the treatment of metallic sheets intended to protect their surfaces temporarily against corrosion and to confer on them a good aptitude for deep-drawing, degreasing and to receive adhesive, comprising the application to the said sheets of an aqueous composition followed by drying of the said surfaces thus treated until a dry film is obtained, characterised in that the said composition comprises at least one emulsifiable modified polyethylene and a hydro-soluble polyalkylene glycol.

2. Process according to Claim 1, characterised in that the aqueous composition includes in addition at least one corrosion inhibitor.

3. Process according to Claim 2, characterised in that it is benzotriazole.

4. Process according to one of the foregoing claims, characterised in that the modified polyethylene has oxydising functional groups of the carboxylic, anhydride, ester type.

5. Process according to any one of Claims 1 to 4, characterised in that the modified polyethylene has at least carboxylic groups to the extent of about one acid group per 100 $CH_2$ groups.

6. Process according to Claim 5, characterised in that the modified polyethylene also has some ester groups.

7. Process according to Claim 4 or 5, characterised in that these groups are totally or partially neutralised in the form of their salts.

8. Process according to Claim 7, characterised in that the neutralisation is effected with morpholine.

9. Process according to any one of the foregoing claims, characterised in that the modified polyethylene has a molecular weight lying between about 5,000 and 20,000 and preferably between 10,000 and 20,000.

10. Process according to one of Claims 1 to 9, characterised in that the emulsifiable modified polyethylene is associated with at least one emulsifying agent.

11. Process according to one of the foregoing claims, characterised in that the emulsifying agent is a fatty alcohol or an alcoxylate of alkyl phenol.

12. Process according to any one of Claims 1 to 11, characterised in that the polyalkylene glycol has a molecular weight lying between 10,000 and 20,000.

13. Process according to any one of the foregoing claims, characterised in that the polyalkylene glycol is preferably linear.

14. , Process according to any one of the foregoing claims, characterised in that the dry part of the aqueous composition comprises between 20% and 60% and preferably it between 30% and 45 % by weight of modified polyethylene.

15. Process according to any one of the foregoing claims, characterised in that the dry part of the aqueous composition comprises between 20 and 60% and preferably between 30 % and 45 % by weight of polyalkylene glycol.

16. Process according to any one of the foregoing claims, characterised in that the modified polyethylene and the polyalkylene glycol are present in a ratio by weight PEM/PAG lying between 0.3 and 3 and preferably between 0.8 and 1.3.

17. Process according to any one of the foregoing claims, characterised in that the dry part of the aqueous composition includes between 5 and 20% and preferably between 7 and 15 % by weight of benzotriazole.

18. Process according to any one of the foregoing claims characterised in that the composition includes between 60 and 90 % and preferably between 70 and 80 % by weight of aqueous solvent.

19. Process according to one of the foregoing claims, characterised in that the aqueous composition preferably comprises at least:

   - 8 to 10 % of a modified polyethylene carrying at least one carboxylic group per 100 $CH_2$ groups and of a molecular weight lying between 10,000 and 20,000,
   - 8 to 10% of a polyalkylene glycol of molecular weight lying between 10,000 and 20,000,
   - 2.3 to 3.3 % of benzotriazole
   - 0.15 to 0.25 % of nonyl phenol ethoxyl,
   - 1.0 to 2.0% of sodium oleate and stearic acid,
   - 67 to 73 % water,
   - 0.4 to 0.8 % of morpholine
   - 4.7 to 6.7 % of ethanol, and
   - traces of triethylamine.

20. Process according to any one of the foregoing claims characterised in that the dry film is applied to the surface of the sheet with a surface density lying between 0.5 $g/m^2$ and 3 $g/m^2$.

21. Aqueous composition for the treatment of the surfaces of metallic sheets such as defined in Claims 1 to 20.

22. Metallic sheet coated with a dry pre-lubricating film obtained according to the process defined in one of Claims 1 to 20 or using a composition according to Claim 21.

23. The use of a metallic sheet according to Claim 22 for producing articles requiring assembly by bonding.

24. The use according to Claim 23 characterised in that the operation of bonding makes use of an adhesive of the epoxy type.

25. The use according to Claim 23 characterised in that the bonding makes use of an adhesive of the rubber type.

FIG. 1

FIG.2

EP 0 897 969 B1